# EUROPEAN PATENT SPECIFICATION

(11) **EP 2 416 226 B1**
(45) Date of publication and mention of the grant of the patent: **06.03.2013**
(21) Application number: 11176456.9
(22) Date of filing: 03.08.2011
(51) Int. Cl.: D06F 33/02, D06F 37/28, D06F 37/42, G05B 9/02

(54) **Washing machine having alternatively operating electric loads**
Waschmaschine mit alternativ wirkenden elektrischen Lasten
Machine à laver ayant des charges fonctionnant de façon alternée

(30) Priority: 03.08.2010 IT TO20100674
(43) Date of publication of application: 08.02.2012
(73) Proprietor: Indesit Company S.p.A., 60044 Fabriano (AN) (IT)
(72) Inventor: Possanza, Mauro, 60044 Fabriano (AN) (IT)
(74) Representative: Santonicola, Paolo

(56) References cited:
- GB-A- 1 354 367
- US-A- 3 552 156

## Description

### Field of the invention

The present invention relates to an household appliance comprising a plurality of electrical loads that can be supplied with alternating current, amongst which two electrical loads with alternative operation, one of which having an impedance lower than the other.

### Background of the invention

Examples of electrical household appliances of the type referred to are laundry-washing machines and dish washers, normally supplied with alternating current, which typically have electrical loads that do not need to be activated simultaneously, i.e., loads that are rendered active in different moments of one and the same treatment program performed by the machine. Typical loads of this type are a heating resistance and a discharge pump: the resistance is activated for heating the washing liquid to carry out a treatment step, whilst the discharge pump is inactive; at the end of the treatment step considered, the liquid is then discharged by actuating the pump, whilst the heating resistance is no longer active.

The discharge pump typically comprises a synchronous or asynchronous electric motor, controlled by means of a triac, which is driven by a control unit for appropriately supplying the windings and switching them to alternating current. If, for any reason, the motor is supplied with direct current, its windings overheat rapidly, with the risk of catching fire: this occurs, for example, when the triac undergoes so-called "diode-mode failure", a mode in which it behaves like a diode and acts like a rectifier.

According to the most traditional technique, protection of the motor windings from overheating is obtained via a thermal protector. This component is installed on the motor, in a position such as to detect possible overheating thereof, and is connected in series to its windings. In this way, when it detects any overheating, the thermal protector stops operation of the motor, interrupting the flow of current that traverses the windings. Thermal protectors for motors are, however, relatively costly components to install so that said most traditional technique has been progressively abandoned.

Control of the heating resistance is typically managed by means of an electromechanical relay, which is also driven by the control unit of the machine. Usually connected in series to the resistance is a thermal fuse, which intervenes in the case where the resistance itself overheats: this may occur, for example, when - owing to any malfunctioning of the machine
- the resistance is activated in the absence of washing liquid in the treatment tank or in the case where its control relay fails in the closing condition of the circuit.

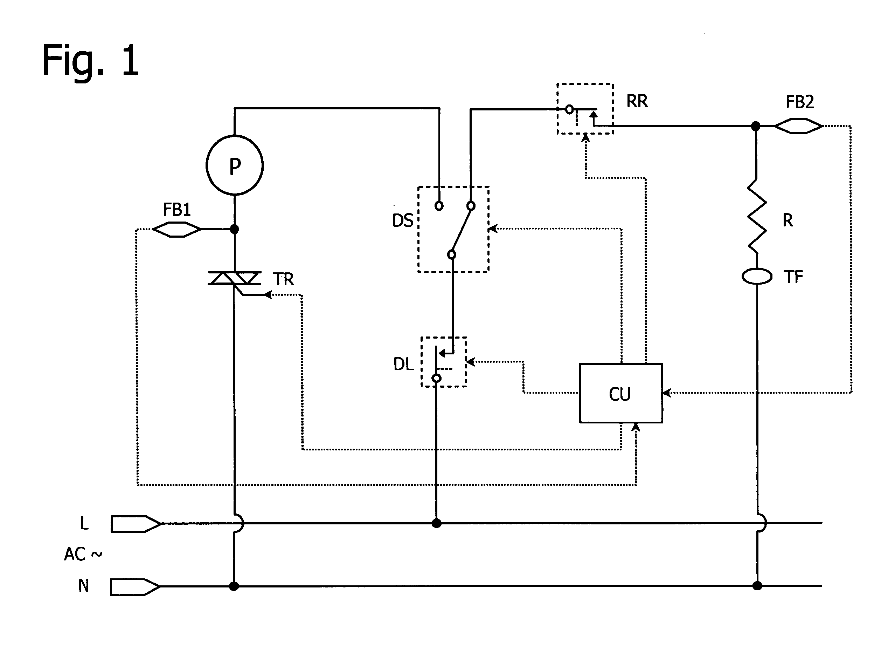

According to the current state of the art, in machines of the type referred to there is provided
- also for normative reasons - a "double safety" arrangement, aimed at facing the possibility of a simultaneous failure of two components of the control circuit of the motor or of the resistance. A typical example of how this function is currently implemented is illustrated in the attached Figure 1.

In said figure, designated by L and N are the lines of live and neutral of the a.c. supply network AC. Designated by P is the motor of the discharge pump, whilst R designates the heating resistance, to which a thermal fuse TF is connected in series. Designated by TR and RR are the triac and the relay that control supply of the motor P and of the resistance R, respectively, and that are driven by the control unit, designated by CU, of the machine. Designated by DS is a deviator relay, which is also driven by the control unit CU and can be switched between a condition where it closes the branch of circuit for the motor P and a condition where it closes the branch of circuit for the resistance R. Designated by DL is a further switch controllable by the unit CU, which belongs to a door-lock device of the machine and is connected in series to the deviator relay DS. Designated by FB1 and FB2 are two feedback circuits, designed to supply to the control unit CU diagnostic information on the state of operation of the triac TR and of the relay RR, respectively.

In normal operating conditions of the machine, the switch DL is closed. With the relay DS in the condition illustrated (closed on the right on the branch of the resistance R), at the appropriate moment of a washing cycle the control unit CU governs closing of the relay RR so as to supply the resistance R. At the end of the heating step the control unit CU governs opening of the relay RR; in the event of closing failure of the relay RR (where by "closing failure" is meant the fact that the relay remains in the closing condition irrespective of the command received), which can be detected via the feedback circuit FB2, the control unit governs switching of the relay DS, thus interrupting supply to the resistance R. In the case where, on account of a further failure, the deviator relay DS remains in its condition and does not carry out switching (a failure which can be detected by the persistence of the signal of the feedback circuit FB2), the control unit CU governs opening of the switch DL. Said possibility is enabled by the fact that - as has been said - the two loads R and P are with alternating operation: this means that, in the case described, even though the relay DS is governed for closing the supply branch of the motor P, the motor itself is not supplied, given the condition of non-conduction of the triac TR.

When, instead, the motor P is to be supplied, once again in conditions of proper operation, the relay DS is in the condition opposite to the one illustrated (closed on the left on the branch of the motor P), and at the appropriate moment of a washing cycle the control unit CU drives the triac TR.

As has been said, a particularly critical condition of failure of the triac TR is the one referred to as "diode-mode failure". As explained previously, when such a failure occurs, the triac TR enables just passage of the positive or negative half-waves of the mains voltage. Consequently, in effect, the motor P is supplied with direct current: the windings of the motor P are not, however, able to withstand said type of supply, thereby overheating rapidly, even with the risk of catching fire.

The possible condition of diode-mode failure of the triac TR can be detected by the control unit CU by means of the feedback circuit FB1. The control unit CU in this case governs opening of the switch DL, thus interrupting supply to the motor P. In the case where following upon a failure the switch DL remains in the closed condition (which can be detected by the persistence of the signal of the feedback circuit FB1), the control unit CU governs switching of the deviator relay DS on the branch of the resistance R, i.e., in the condition illustrated in the figure. As may be appreciated, in the case described, even though the relay DS is switched in the sense of closing the supply branch of the resistance R, this is not in any case supplied given the condition of opening of the relay RR

An example of laundry washing-machine according to said load driving architecture is that one produced by Indesit Company and available on the market with product code IWD 5105 (EU).

### Summary and object of the invention

The circuit solution of Figure 1, albeit efficient and able to guarantee the "double safety" requirements is, nevertheless, relatively complicated and costly.

The object of the present invention is basically to provide an improved circuitry for control of two loads with alternating operation of the same type as the ones previously exemplified, and in particular to provide a circuit arrangement that is simple and inexpensive but in any case able to ensure the necessary double degree of safety required by the standards. The above and other objects still that will emerge more clearly hereinafter are achieved according to the present invention by an electrical household appliance having the characteristics referred to in Claim 1. Preferred characteristics of the invention are specified in the dependent claims. The claims form an integral part of the technical teaching provided herein in relation to the invention.

### Brief description of the drawings

The purposes, characteristics, and advantages of the present invention will emerge clearly from the ensuing description, presented with reference to the annexed drawings, which are provided purely by way of non-limiting example and in which:
- Figure 1 illustrates a part of a control circuit of an electrical household appliance according to the known art, in relation to two electrical loads with alternating operation;
- Figure 2 illustrates a part of a control circuit of an electrical household appliance in accordance with a first embodiment of the invention, in relation to two electrical loads with alternating operation; and
- Figure 3 illustrates a part of a control circuit of an electrical household appliance in accordance with a second embodiment of the invention, in relation to two electrical loads with alternating operation.

### Description of preferred embodiments of the invention

Reference to *"an embodiment"* or *"one embodiment"* in the framework of the present description is intended to indicate that a particular configuration, structure, or characteristic described in relation to the embodiment is comprised in at least one embodiment. Likewise, phrases such as *"in an embodiment"* or *"in one embodiment"* and the like that may be present in different points of the present description do not necessarily all refer to one and the same embodiment. Moreover, the particular configurations, structures, or characteristics can be combined in any adequate way in one or more embodiments. The references appearing herein are used only for convenience and do not define the sphere of protection or the scope of the embodiments.

Wherever not otherwise specified, in the framework of the present description and attached claims, the term *"effective",* when referred to operation of an electrical load of the electrical household appliance, is intended to indicate that said load operates completely for the purposes of execution of the function assigned thereto. In said perspective, for example with reference to a machine for washing, effective operation of a heating element implies that said element is supplied electrically so as to produce a given thermal energy, designed to bring about heating of a washing liquid as envisaged by an operating program of the machine in order to perform its function for the purposes of treating laundry. Likewise, in the case of the motor of a discharge pump, effective operation implies that said motor is supplied electrically so that the pump brings about a programmed emptying-out of the washing liquid from a treatment tank of the machine.

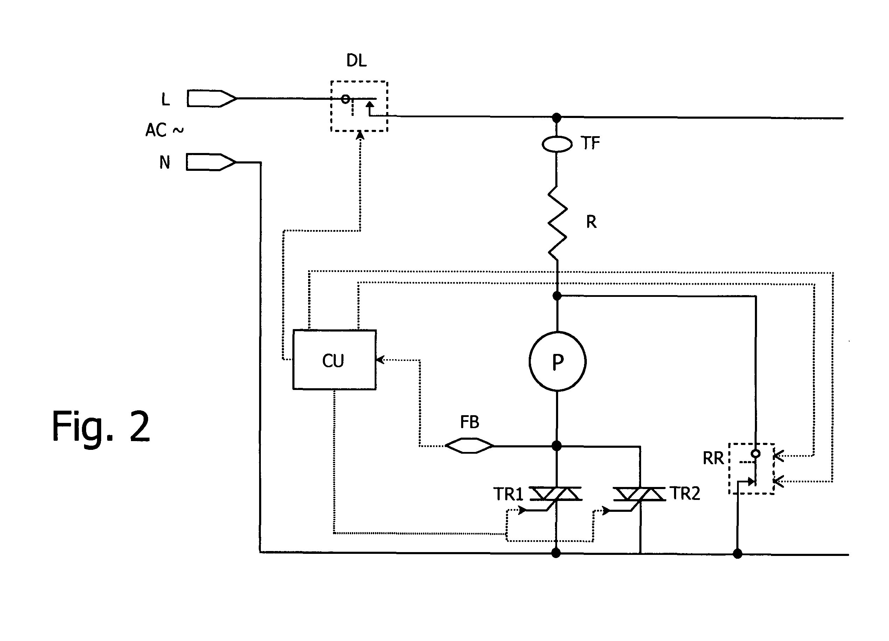

Represented in Figure 2 is the circuit diagram for control of an electrical household appliance according to the invention, limitedly to the part of interest for the purposes of an understanding of the present invention.

In the example, the electrical household appliance considered is a machine for washing, such as a laundry-washing machine; in Figure 2 reference numbers are hence used that are in part similar to those of Figure 1 in order to designate elements that are technically equivalent to the ones already described above.

In Figure 2, L and N hence designate the live line and the neutral line of the a.c. network AC, via which the circuit is supplied. As in the known art, the machine comprises a plurality of electrical loads, which can be supplied with the alternating current AC, operation of which is controlled by means of the control unit designated by CU, in particular of an electronic-microcontroller type, which drives corresponding controllable switch means, in accordance with an operating program of the machine.

The aforesaid electrical loads comprise a first electrical load and a second electrical load with alternative operation, i.e., two loads that, in proper conditions of operation of the machine, are rendered effective during different periods, according to the operating program. With reference to the preferred example of embodiment provided herein, the first load is constituted by an element for heating the washing liquid, such as the electrical resistance designated by R, whilst the second electrical load is constituted by the synchronous motor designated by P, in particular the motor of a pump for discharge of the washing liquid. The resistance R and the motor P are of a type commonly used in the sector, the impedance of the resistance being lower than the impedance of the motor. By way of indication, the impedance of the resistance R is lower than 30 Ω, whilst the impedance of the motor P is higher than 2 kΩ.

Designated by TF is a known thermal fuse for protecting the resistance R. Designated by RR are first switch means, driven by the control unit CU for controlling alternating-current electrical supply AC to the resistance R so as to render operation thereof effective, when envisaged by the treatment program of the machine. The switch means RR comprise, for example, an electromechanical relay of a type in itself known in the sector.

The circuit comprises second switch means, which are also driven by the control unit CU for controlling the alternating-current electrical supply AC to the motor P so as to render operation thereof effective, when envisaged by a treatment program of the machine, i.e., at different times from the resistance R. In the example of embodiment illustrated, the second switch means comprise a first triac TR1 and a second triac TR2, in parallel with the first triac TR2, the two triacs TR1 and TR2 being preferably driven by a common signal generated by the control unit CU.

As explained previously, the two loads represented by the resistance R and by the motor P have an alternating operation. Consequently, the control unit CU is prearranged for driving the relay RR, on the one hand, and the triacs TR1 and TR2 on the other, so that operation of the resistance R is rendered effective during periods of operation of the machine different from the periods in which operation of the motor P is rendered effective.

Designated by DL are third switch means, driven by the control unit, connected in series to the resistance R. In the example, the third switch means DL are constituted by a controllable switch, belonging to a door-lock device of the machine for washing.

In the example of embodiment, the control circuit comprises a single feedback circuit FB, configured - in a way in itself clear to the person skilled in the branch - for detecting the possible state of diode-mode failure of the triacs TR1 and TR2 and also of closing failure of the relay RR. In the condition where the triacs TR1 and TR2 are open and also the relay RR is open, the voltage that can be detected on the node FB follows the plot of the voltage present on the network node L for the entire period of the signal AC present on the mains supply. In said condition, the diode-mode failure of one of the triacs TR1, TR2 would have the effect that the voltage on the node FB would follow the plot of the voltage present on the network node L only over a half-period of the signal AC, following, over the other half-period, the plot of the voltage present on the network node N. A closing failure of the relay RR would, instead, have the effect that the voltage on the node FB would follow the plot of the voltage present on the network node N for the entire period of the signal AC.

According to the invention, connected in series to the load at lower impedance, represented by the resistance R, are the load at higher impedance, represented by the motor P, and the first switch means, represented by the relay RR, whilst the second switch means, represented by the triacs TR1 and TR2, are connected in series to the second load, i.e., to the pump P; the first switch means (i.e., the relay RR) are finally connected in parallel to the series of the second electrical load (the motor P) and the second switch means (the triacs TR1 and TR2). As may be seen, in the example represented the resistance R is connected to the live line L, through the thermal fuse TF. The motor P is set in series downstream of the resistance R. Set downstream of the motor P, once again in series, are the triacs TR1 and TR2, which are in parallel to one another and connected at the other end to the neutral line N. The relay RR is set downstream of the resistance R in parallel to the circuit constituted by the motor P and its drive and is also connected to the neutral line. The switch DL is in series on the live line L, upstream of the thermal fuse TF.

The fact that the motor P is set in series to the resistance R does not create any problems for proper operation of the motor given that the impedance of the latter is far higher than the impedance of the resistance R: this connection hence does not modify driving of the motor P, nor its efficient operation. In other words, the difference of impedance between the two loads is such that, even by activating the motor P by means of the corresponding triacs TR1, TR2, there is a passage of current on the resistance R that has negligible effects in terms of heating thereof. On the other hand, the mode of activation of the resistance R in normal operating conditions of the machine is not altered, given the connection of the relay RR in parallel to the motor P of the pump.

As regards the resistance R, with the switch DL closed, the unit CU governs closing of the relay RR when, at a given moment of the operating program of the machine, it is necessary to start up heating of the washing liquid. At the end of the heating step, the control unit CU governs opening of the relay RR. In the event of closing failure of the relay RR, said condition can be detected by the unit CU via the signal of the feedback circuit FB, according to what has been described previously: consequently, the unit CU governs opening of the switch DL, which interrupts supply to the circuit, and hence to the resistance R. In the case where a second, concurrent, failure prevents opening of the switch DL, the protection of the resistance R is guaranteed by the presence of the thermal fuse TF, which, by overheating beyond its limit of normal operation, opens and disconnects the resistance itself from the supply. The diode-mode failure of one of the two triacs TR1 and TR2 is detected by the unit CU by means of the feedback circuit FB. The unit CU can, in this case, govern opening of the switch DL; in the event of a second failure that prevents said opening, the unit CU can govern turning-on of the triac. The connection in parallel of the two triacs ensures that the triac that has not failed enables passage to the motor P both of the positive half-waves and of the negative half-waves of the mains voltage AC, determining the constancy of supply in alternating current to the motor P, thereby preventing overheating thereof. The fact then that the pump is constantly in motion can possibly be detected by the user of the machine, who may see to turning it off. In the aforesaid condition, as an alternative to turning on the triacs, the unit CU could govern closing of the relay RR so as to remove supply from the motor P of the pump; the consequent turning-on of the resistance R would occur in any case in conditions of safety owing to the presence of the thermal fuse TF that protects it.

It should be noted that, in the latter event, the activation of the resistance R as part of the safety procedure occurs in any case only following upon a double failure on the other components responsible for safety, i.e., one of the triacs TR1, TR2 and the switch DL or the corresponding driving circuitry.

In the case of a leakage failure of the resistance R there may be the presence of the voltage L on the node between the resistance R and the motor P: in said condition, the standards envisage considering a second, concurrent, failure. In the case where said second, concurrent, failure were to be due to one of the two triacs TR1, TR2 that has undergone diode-mode failure, the condition of operation that thus arises can be detected by the unit CU via the signal of the feedback circuit FB. The presence of two triacs arranged in parallel guarantees that, if the unit CU governs turning-on of the triacs TR1 and TR2, proper supply of the motor P and setting in conditions of safety of the machine are in any case ensured, thus preventing the risk of the pump catching fire. The fact then that the pump is constantly in motion may possibly be detected by the user of the machine, who can see to turning it off. A further important case of leakage failure of the resistance R is the one in which there is the presence of the voltage L on the node between the resistance R and the thermal fuse TF. In this case, the protection from the risk of the resistance R catching fire is ensured by adopting a circuitry for driving the relay RR that is immune to the single failure, i.e., that even in the presence of a single failure, does not bring about closing of the switch RR. A circuitry of this sort, not represented in so far as it is in itself known to the person skilled in the branch, is obtained by providing at least one pair of switch devices with independent driving (as exemplified in Figure 2 by the double dashed line towards the relay RR), in series to the driving coil of the relay, the relay itself being of the normally open type. With such a configuration, a single failure cannot produce activation of the relay RR and consequent supply of the resistance.

As may be seen, as compared to the known art illustrated in Figure 1, the arrangement of Figure 2 enables elimination of the deviator relay DS, which is replaced by a less expensive triac, and the feedback circuit FB2 of the resistance R, enabling an optimization of the circuitry for control of the loads and a consequent saving in costs. It is to be noted that, with the known solution of Figure 1, the presence of the deviator relay DS leads to the impossibility of having the circuitry of the resistance R and the circuitry of the motor P simultaneously energized, and, consequently, the monitoring of the corresponding components TR and RR cannot be active simultaneously. In the solution according to the invention, the feedback circuit FB alone is instead sufficient, which is able to monitor both the triacs TR1, TR2 and the relay RR

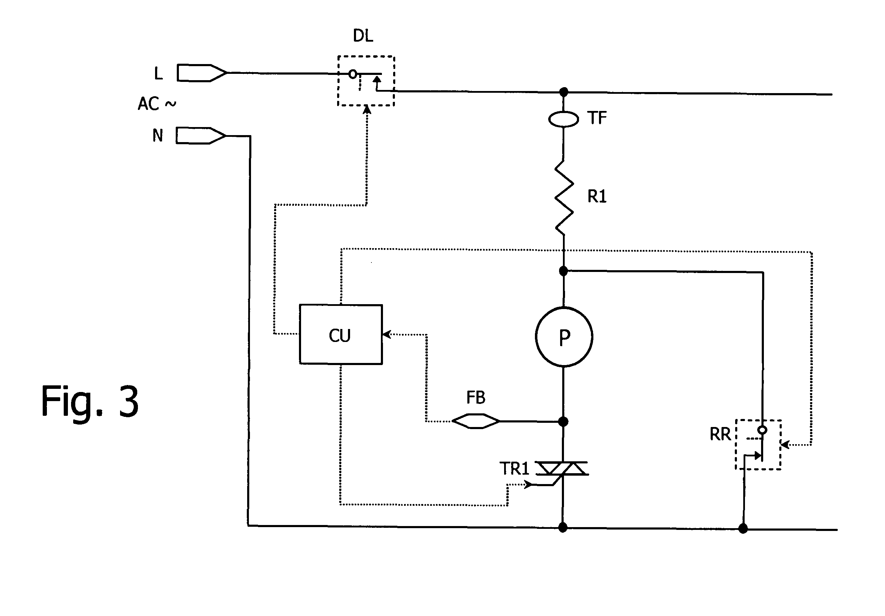

Illustrated in Figure 3 is a second embodiment of the invention, which to a large extent corresponds to the embodiment of Figure 2. This embodiment is particularly indicated in the case of use of resistances of a type protected against leakages and does not envisage the use of the second triac TR2 for driving the motor P. Also in this case, the relay RR performs, in addition to the function of control of the load represented by the resistance R1, also a function of safety for the motor P. In this embodiment, there is no risk of leakage failure of the resistance R1, it being - as has been said - protected against said type of failure.

In conditions of proper operation of the machine, its door is locked, i.e., the switch DL of the door-lock device is closed. From an analysis of the signal generated by the feedback circuit FB, the control unit CU can carry out the diagnostics of proper operation of the circuit, in particular of the triac TR1. If the condition of diode-mode failure of the triac TR1 is detected, the necessary safety actions must be implemented, as explained previously, in order to prevent damage to the motor P and the possibility of it catching fire.

Also in this embodiment, the procedure envisages that the unit CU releases the door of the machine, by governing opening of the switch DL, so as to interrupt the passage of current on the motor P. In the case of a simultaneous failure that prevents opening of the switch DL, the unit CU - which detects said failure by means of the feedback signal FB - then governs closing of the relay RR of the resistance R1, indirectly deactivating the motor P. As explained previously, turning-on of the resistance R1 can in this case cause overheating thereof so that the fuse TF intervenes, leading to disconnection of the resistance from the mains supply, and consequently also disconnection of the motor P, thus maintaining the machine in conditions of safety.

As emerges clearly, the activation of the resistance R1 as part of the safety procedure occurs only following upon a double failure on the other components responsible for safety, i.e., the triac TR1, the switch DL and the corresponding driving circuitries.

Of course, without prejudice to the principle of the invention, the details of construction and the embodiments may vary widely with respect to what has been described and illustrated herein purely by way of example, without thereby departing from the scope of the present invention as defined in the annexed claims.

The invention has been described with particular reference to a washing machine, but the same concepts are applicable also to a washer-drier or else to a dish washer, which typically comprises a resistance for heating the washing liquid and a discharge pump, i.e., two loads that - in conditions of proper operation of the dish washer - are rendered active at different moments. A similar consideration can be made, for example, with reference to a laundry drier, provided with a resistance for heating the air and a discharge pump, when said loads are rendered effective in an alternative way.

More in general, however, the invention is applicable to any electrical household appliance distinguished by the presence of two electrical loads that can be supplied alternatively with alternating current, one of which having an impedance lower than the other.

## Claims

1. A machine for washing, such as a laundry-washing machine or a dish washer, comprising:
- a plurality of electrical loads to be supplied with alternating current (AC), including a heating element (R; R1) for heating a washing liquid and a motor of a pump (P) for discharging the washing liquid , said heating element having an impedance lower than that of said motor of a pump (P);
- a control circuit, which includes:
- a control unit (CU),
- first switch means (RR), driven by the control unit (CU) for controlling the alternating-current electrical supply (AC) to said heating element (R; R1) so as to render operation thereof effective;
- second switch means (TR1, TR2; TR1), driven by the control unit (CU) for controlling the alternating-current electrical supply (AC) to said motor of a pump (P) so as to render operation thereof effective;
wherein the control unit (CU) is configured for driving the first and second switch means so that said heating element (R; R1) is rendered effective during periods of operation of the electrical household appliance different from the ones in which said motor of a pump (P) is rendered effective,
said electrical household appliance being **characterized in that**:
- said motor of a pump (P) is connected in series to the heating element (R; R') and the first switch means (RR) is connected in series to said heating element (R; R');
- the second switch means (TR1, TR2; TR1) are connected in series to said motor of a pump (P); and
- the first switch means (RR) are connected in parallel to the series of said motor of a pump (P) and the second switch means (TR1, TR2; TR1).

2. The machine according to Claim 1, wherein the second switch means (TR1, TR2; TR1) comprise a first triac (TR1).

3. The machine according to Claim 2, wherein the second switch means (TR1, TR2) comprise a second triac (TR2), in parallel to the first triac (TR1), the first and second triacs (TR1, TR2) being driven in common by the control unit (CU).

4. The machine according to Claim 2 or Claim 3, wherein the first switch means comprise an electromechanical relay (RR).

5. The machine according to any one of the preceding claims, wherein the control circuit further comprises third switch means (DL), driven by the control unit (CU) and connected in series to said heating element (R; R1).

6. The machine according to Claim 5, wherein the third switch means (DL) form part of a door-lock device of the electrical household appliance.

7. The machine according to Claims 2 and 4, wherein the control circuit further comprises a feedback circuit (FB) designed to detect a state of diode-mode failure of the first triac (TR1) and designed to detect a state of closing failure of said electromechanical relay (RR).

8. The machine according to Claim 2, wherein the heating element is a heating element (R1) protected against leakages.

## Patentansprüche

1. Waschmaschine, wie etwa Wäschewaschmaschine oder Geschirrspüler, umfassend:
- eine Mehrzahl von elektrischen Lasten, die mit Wechselstrom (AC) zu versorgen sind, einschließlich eines Heizelements (R; R1) zum Heizen einer Waschflüssigkeit sowie eines Motors einer Pumpe (P) zum Abgeben der Waschflüssigkeit, wobei das Heizelement eine Impedanz hat, die niedriger ist als jene des Motors einer Pumpe (P):
- eine Steuerschaltung, welche enthält:
- eine Steuereinheit (CU),
- erste Schaltmittel (RR), die von der Steuereinheit (CU) betrieben werden, um die elektrische Wechselstromversorgung (AC) zu dem Heizelement (R; R1) zu steuern/zu regeln, um deren Betrieb effektiv zu machen;
- zweite Schaltmittel (TR1, TR2; TR1), die von der Steuereinheit (CU) betrieben werden, um die elektrische Wechselstromversorgung (AC) zu dem Motor einer Pumpe (P) zu steuern/zu regeln, um deren Betrieb effektiv zu machen;
- worin die Steuereinheit (CU) konfiguriert ist, um die ersten und zweiten Schaltmittel so zu betreiben, dass das Heizelement (R; R1) während Betriebsperioden des elektrischen Haushaltsgeräts effektiv gemacht wird, die sich von jenen unterscheiden, in denen der Motor einer Pumpe (P) effektiv gemacht wird,
wobei das elektrische Haushaltsgerät **dadurch gekennzeichnet ist, dass**:
- der Motor einer Pumpe (P) in Serie mit dem Heizelement (R; R') verbunden ist und das erste Schaltmittel (RR) in Serie mit dem Heizelement (R; R') verbunden ist;
- die zweiten Schaltmittel (TR1, TR2; TR1) in Serie mit dem Motor einer Pumpe (P) verbunden sind; und
- die ersten Schaltmittel (RR) parallel zur Serie des Motors einer Pumpe (P) und der zweiten Schaltmittel (TR1, TR2; TR1) verbunden sind.

2. Die Maschine nach Anspruch 1, worin die zweiten Schaltmittel (TR1, TR2; TR1) einen ersten Triac (TR1) aufweisen.

3. Die Maschine nach Anspruch 2, worin die zweiten Schaltmittel (TR1, TR2) einen zweiten Triac (TR2), parallel zum ersten Triac (TR1), aufweisen, wobei die ersten und zweiten Triacs (TR1, TR2) von der Steuereinheit (CU) gemeinsam betrieben werden.

4. Die Maschine nach Anspruch 2 oder Anspruch 3, worin die ersten Schaltmittel ein elektromechanisches Relais (RR) aufweisen.

5. Die Maschine nach einem der vorhergehenden Ansprüche, worin die Steuereinheit ferner dritte Schaltmittel (DL) aufweist, die von der Steuereinheit (CU) betrieben werden und in Serie mit dem Heizelement (R; R1) verbunden sind.

6. Die Maschine nach Anspruch 5, worin die dritten Schaltmittel (DL) Teil einer Türverriegelungsvorrichtung des elektrischen Haushaltsgeräts bilden.

7. Die Maschine nach den Ansprüchen 2 und 4, worin die Steuereinheit ferner eine Rückkopplungsschaltung (FB) aufweist, die ausgestaltet ist, um einen Diodenmodus-Fehlerzustand des ersten Triacs (TR1) zu detektieren, und ausgestaltet ist, um einen Schließfehlerzustand des elektromechanischen Relais (RR) zu detektieren.

8. Die Maschine nach Anspruch 2, worin das Heizelement ein gegen Leckagen geschütztes Heizelement (R1) ist.

## Revendications

1. Machine à laver, telle qu'une machine à laver le linge ou un lave-vaisselle, comportant :
- une pluralité de charges électriques à alimenter avec un courant alternatif (AC), incluant un élément chauffant (R ; R1) pour chauffer un liquide de lavage et un moteur de pompe (P) pour évacuer le liquide de lavage, ledit élément chauffant ayant une impédance inférieure à celle dudit moteur de la pompe (P) ;
- un circuit de commande, lequel comporte :
- une unité de commande (CU),
- des premiers moyens de commutation (RR) commandés par l'unité de commande (CU) pour commander l'alimentation électrique en courant alternatif (AC) destiné au dit élément chauffant (R ; R1) de façon à rendre son fonctionnement effectif ;
- des deuxièmes moyens de commutation (TR1, TR2 ; TR1) commandés par l'unité de commande (CU) pour commander l'alimentation électrique en courant alternatif (AC) destiné au dit moteur de pompe (P) de façon à rendre son fonctionnement effectif ;
dans laquelle l'unité de commande (CU) est configurée pour commander les premiers et les deuxièmes moyens de commutation de façon que ledit élément chauffant (R ; R1) soit rendu effectif pendant les périodes de fonctionnement de l'appareil électrique ménager autres que celles des appareils dans lesquels ledit moteur de pompe (P) est rendu effectif,
ledit appareil électrique ménager étant **caractérisé en ce que** :
- ledit moteur de pompe (P) est connecté en série à l'élément chauffant (R ; R') et les premiers moyens de commutation (RR) sont connectés en série au dit élément chauffant (R ; R') ;
- les deuxièmes moyens de commutation (TR1, TR2 ; TR1) sont connectés en série au dit moteur de pompe (P) ; et
- les premiers moyens de commutation (RR) sont connectés en parallèle au montage en série dudit moteur de pompe (P) et des deuxièmes moyens de commutation (TR1, TR2 ; TR1).

2. Machine selon la revendication 1, dans laquelle les deuxièmes moyens de commutation (TR1, TR2 ; TR1) comportent un premier triac (TR1).

3. Machine selon la revendication 2, dans laquelle les deuxièmes moyens de commutation (TR1, TR2) comportent un second triac (TR2), en parallèle avec le premier triac (TR1), les premier et second triacs (TR1, TR2) étant commandés en commun par l'unité de commande (CU).

4. Machine selon la revendication 2 ou la revendication 3, dans laquelle les premiers moyens de commutation comprennent un relais électromécanique (RR).

5. Machine selon l'une quelconque des revendications précédentes, dans laquelle le circuit de commande comprend, de plus, des troisièmes moyens de commutation (DL), commandés par l'unité de commande (CU) et connectés en série au dit élément de chauffage (R ; R1).

6. Machine selon la revendication 5, dans laquelle les troisièmes moyens de commutation (DL) font partie d'un dispositif de verrouillage de porte de l'appareil ménager électrique.

7. Machine selon les revendications 2 et 4, dans laquelle le circuit de commande comprend, de plus, un circuit de réaction (FB) conçu pour détecter un état de défaut du mode diode du premier triac (TR1) et conçu pour détecter un état de défaut de fermeture dudit relais électromécanique (RR).

8. Machine selon la revendication 2, dans laquelle l'élément chauffant est un élément chauffant (RI) protégé des fuites.
